# EUROPÄISCHE PATENTSCHRIFT

(11) **EP 1 129 268 B1**
(45) Veröffentlichungstag und Bekanntmachung des Hinweises auf die Patenterteilung: **07.07.2004**
(21) Anmeldenummer: 99960918.3
(22) Anmeldetag: 12.11.1999
(51) Int. Cl.: E05F 15/00, E05F 15/16, B60J 1/17

(54) **VORRICHTUNG ZUM ERFASSEN DER VERSTELLUNG TRANSLATORISCH BEWEGTER VERSTELLEINRICHTUNGEN IN FAHRZEUGEN**
DEVICE FOR DETECTING THE ADJUSTMENT OF TRANSLATIONALLY MOVED ADJUSTING DEVICES IN VEHICLES
DISPOSITIF PERMETTANT DE DETECTER LE REGLAGE DE DISPOSITIFS DE REGLAGE A DEPLACEMENT TRANSLATOIRE DANS DES VEHICULES

(30) Priorität: 13.11.1998 DE 19854038
(43) Veröffentlichungstag der Anmeldung: 05.09.2001
(73) Patentinhaber: Brose Fahrzeugteile GmbH & Co. KG, Coburg, 96450 Coburg (DE)
(72) Erfinder: HEINRICH, Peter, D-98553 Hinternah (DE)
(74) Vertreter: Ninnemann, Detlef, Dipl.-Ing.
(86) Internationale Anmeldenummer: PCT/DE1999/003662
(87) Internationale Veröffentlichungsnummer: WO 2000/029701

(56) Entgegenhaltungen:
- DE-A- 4 020 351
- DE-A- 19 619 932

## Beschreibung

Die Erfindung betrifft eine Vorrichtung zum Erfassen der Verstellung translatorisch bewegter Verstelleinrichtungen in Fahrzeugen nach dem Oberbegriff des Anspruchs 1.

Die Vorrichtung kann insbesondere zur Erfassung von Beschleunigungskräften dienen, die beim Befahren von Schlechtwegstrecken auf das Fahrzeug einwirken.

Aus der DE 40 20 351 C2 ist ein Verfahren zur elektronischen Überwachung und Steuerung des Öffnungs- und Schließvorganges von elektrisch betriebenen Aggregaten bekannt, bei dem ein Stellorgan mit einer Sensoreinrichtung verbunden ist, die ursächlich mit der Verstellbewegung des Stellorgans zusammenhängende Verstellparameter erfaßt. Diese Einrichtung besteht beispielsweise aus einem Sensor, der den Grad der Verstellbewegung einer Fensterscheibe anzeigt. Weiterhin ist ein zusätzlicher Sensor in dem Fahrzeug installiert, um auf die Karosserie einwirkende Beschleunigungskräfte zu ermitteln, die nicht ursächlich mit der Verstellbewegung des Stellorgans zusammenhängen, aber für das Auslösen eines Einklemmschutzes zur Sicherung von Personen und Gegenständen gegen ein Einklemmen zwischen der Fensterscheibe und dem Türrahmen eines Fahrzeugs benötigt werden.

Nachteilig an dieser Lösung ist, daß ein zweites, separates Sensorelement mit den entsprechenden Zuleitungen und Anschlüssen vorgesehen werden muß, was den Montage- und Materialaufwand erhöht.

Aus der DE 196 19 932 A1 ist ein Elektromotor-Stellantrieb bekannt, der ein Durchfahren von Schlaglöchern ohne zusätzlichen Sensor dadurch erkennt, daß sich die Umdrehungsdauer der Antriebsachse sprunghaft und nichtstetig ändert. Liegt eine solche Änderung vor, wird diese beim Auslösen einer Einklemmschutzvorrichtung nicht berücksichtigt.

Nachteilig an dieser Lösung ist, daß nur diejenigen Beschleunigungskräfte erfaßt werden, die in Verstellrichtung liegen. Weiterhin sind bei einer nicht bewegten Verstelleinrichtung keinerlei Informationen über die auftretenden Beschleunigungskräfte zu erhalten.

Weiterhin sind Beschleunigungsschalter bekannt, die bei Auftreten hoher Beschleunigungen, etwa bei einem Unfall, einen Kontakt herstellen. Mit diesen Schalter ist jedoch keine Aussage über den Grad der Beschleunigung möglich, da lediglich ein Überschreiten eines Grenzwertes ermittelt wird.

Aufgabe der vorliegenden Erfindung ist es, eine Vorrichtung der eingangs genannten Gattung zu schaffen, mit der bei einem geringen baulichen Aufwand möglichst viele Informationen über die Verstellbewegung translatorisch bewegter Verstelleinrichtungen sowie der auf das Fahrzeug einwirkenden Kräfte gewonnen werden.

Erfindungsgemäß wird diese Aufgabe durch eine Vorrichtung mit den Merkmalen des Anspruch 1 gelöst.

Durch die erfindungsgemäße Lösung ist es möglich, Informationen über das Beschleunigungsverhalten von Fahrzeugen zu erhalten, ohne eine zusätzliche Sensoreinrichtung vorsehen zu müssen, so daß die ohnehin vorhandenen Bauelemente optimal genutzt werden. Damit wird gewährleistet, daß mit derjenigen Sensoreinrichtung, die die Drehbewegung eines Verstellantriebes detektiert, um bei Erreichen einer bestimmten Position den Antrieb zu verlangsamen oder abzuschalten, auch die Rüttelbewegung eines Fahrzeugen bei dem Befahren einer Schlechtwegstrecke erfaßt werden. Diese Information ist insbesondere für das Auslösen eines Einklemmschutzes von Bedeutung, da das eingestellte Auslösekriterium durch die zusätzlichen Beschleunigungskräfte verfälscht werden kann.

Ebenso können Querbeschleunigungen beim schnellen Durchfahren von Kurven ermittelt werden, die entweder für die Festlegung von Grenzwerten des Einklemmschutzes verwendet oder anderen Steuerungseinrichtungen zugeführt werden, beispielsweise zur Beeinflussung eines aktiven Fahrwerkes oder einer Bremsensteuerung. Ebenso ist es möglich, starkes Beschleunigen oder Verzögern des Fahrzeuges zu ermitteln.

Ein weiterer Einsatzbereich liegt in der Rüttelerkennung des Verstellantriebes. Beim Anfahren bzw. Anlaufen des Motors kommt es zu Rüttelbewegungen aufgrund der zu überwindenden Losbrechkräfte und Anfahrmomente. Mit der erfindungsgemäßen Vorrichtung lassen sich die Bedingungen beim Anlauf ermitteln, die auf äußere Einflüsse wie Temperatur oder Feuchtigkeit zurückzuführen sind. Damit ist es möglich, beispielsweise eine Normierung des Schwellenwertes für einen Einklemmschutz vorzunehmen, da bei stärkeren Rüttelbewegungen beim Anlaufen auf einen größeren Widerstand, z.B. einen größeren Reibungswiderstand der Verstelleinrichtung geschlossen werden kann, so daß der Schwellenwert entsprechend angepaßt werden muß.

Ebenfalls ist eine quantitative Bewertung der Rüttelbewegung möglich, d.h. das Maß der Rüttelbewegung erlaubt Rückschlüsse auf die Widerstände in der Verstelleinrichtung, beispielsweise auf einen verkehrten oder korrekten Einbau, auf Verschleiß bzw. auf optimale Betriebsbedingungen.

Erfaßt der Sensor die in Richtung der Verstellbewegung auf das Fahrzeug einwirkenden Beschleunigungskräfte, ist eine besonders einfache Ermittlung der auf die Verstelleinrichtung wirkenden Zusatzkraft möglich. Dadurch kann der Schwellenwert des Einklemmschutzes mit wenig Aufwand angepaßt werden.

In eine Ausgestaltungsform der Erfindung besteht der Sensor aus mehreren einander zugeordneten Sensorelementen, von denen ein erstes Sensorelement mit der Verstelleinrichtung oder einem Antrieb für die Verstelleinrichtung verbunden ist. Ein dem ersten Sensorelement zugeordnetes zweites Sensorelement ist unabhängig vom ersten Sensorelement angeordnet.

Damit ist die Möglichkeit gegeben, die auf das Fahrzeug einwirkenden Kräfte zu ermitteln, wenn mindestens eines der Sensorelemente federnd unmittelbar am Fahrzeugchassis oder über die Verstelleinrichtung bzw. den Antrieb für die Verstelleinrichtung am Fahrzeugchassis abgestützt ist. Treten bleibende Verlagerungen zwischen den Sensorelementen auf, beispielsweise in Folge eines Unfalles, kann aus der Verlagerung und dem daher veränderten Signal auf die Gebrauchsfähigkeit der Verstelleinrichtung und den Grad des Unfallschadens geschlossen werden.

Aus Gründen der Verschleißminimierung und einer optimalen Erfassung zusätzlich auf das Fahrzeug einwirkender Kräfte ist es vorteilhaft, die Sensorelemente berührungslos zueinander anzuordnen.

In einer Weiterbildung der Erfindung gibt ein signalgebendes Sensorelement (Geber) ein Signal mit konstanter Amplitude und/oder Frequenz ab und die von einem signalempfangenden Sensorelement (Aufnehmer) erfaßten Amplituden- und/oder Frequenzänderungen stellen eine Funktion der auf das Fahrzeug einwirkenden Kräfte dar.

Vorzugsweise weist das signalgebende Sensorelement hierzu mindestens eine Partitionierung mit zwei Abschnitten unterschiedlicher Signalpegel auf und das signalempfangende Sensorelement ist in Bezug auf das signalgebende Sensorelement so positioniert, daß zum einen die von den Abschnitten unterschiedlicher Signalpegel ausgehenden Signale und zum anderen auf Verschiebungen des signalgebenden Sensorelements und/oder des signalempfangenden Sensorelements beruhende Signaländerungen erfaßt werden. Auf diese Weise können die jeweiligen Verstellbewegungen und die einwirkenden Kräfte einfach und sicher erfaßt werden.

In einer vorteilhaften Ausgestaltung der Erfindung gibt die Schaltungsanordnung zur Auswertung der Sensorsignale ein Beschleunigungssignal ab, wenn die von dem signalempfangenden Sensorelement erfaßten Amplituden- und/oder Frequenzänderungen einen vorgegebenen Schwellwert überschreiten.

Die Schaltungsanordnung zur Auswertung der Sensorsignale weist in einer Weiterbildung der erfindungsgemäßen Vorrichtung einen mit dem Ausgang des signalempfangenden Sensorelements verbundenen Verstärker auf, dessen Ausgang mit dem einen Eingang eines ersten Komparators verbunden ist. Der andere Eingang des Komparators ist an eine erste Referenzspannungsquelle angeschlossen, die dem vorgebbaren Schwellwert der Amplitudenänderung entspricht und an dessen Ausgang das Beschleunigungssignal ansteht.

In einer Variante der Erfindung erfaßt ein Sensor die Drehzahl und/oder Drehrichtung des Antriebs der Verstelleinrichtung über einen mit der Antriebswelle verbundenen Signalgeber und einem dem Signalgeber zugeordneten Signalempfänger. Geber und Empfänger sind relativ zueinander beweglich angeordnet, wobei der Signalempfänger die Relativbewegungen zwischen dem Signalgeber und dem Signalempfänger erfaßt und den Relativbewegungen entsprechende Sensorsignale an die Schaltungsanordnung zur Auswertung der Sensorsignale abgibt.

Besonders einfach ist eine solche Anordnung zu realisieren, wenn der Signalgeber in axialer Richtung um eine Ruhestellung elastisch verschiebbar an der Antriebswelle abgestützt ist und der Signalempfänger die axiale Verschiebung des Signalgebers erfaßt. Alternativ dazu ist der Signalgeber fest mit der Antriebswelle verbunden und die Antriebswelle ist in axialer Richtung um eine Ruhestellung elastisch verschiebbar gelagert. Möglich ist jedoch auch, daß der Signalempfänger in axialer Richtung der Antriebswelle und/oder senkrecht zur Antriebswelle um eine Ruhestellung elastisch verschiebbar angeordnet ist.

Um nur bestimmte Bewegungen des Signalempfängers zuzulassen, beispielsweise um eine maximale Auslenkung festzulegen oder Bewegungsrichtungen zu überlagern, ist der Signalempfänger entlang einer Führungsbahn verschiebbar ausgebildet.

Vorteilhafterweise ist der Signalgeber aus einem Ringmagneten oder einem zylinderförmigen Multipolmagneten und der Signalempfänger aus einem auf den Ringmagneten oder die Mantelfläche des Multipolmagneten ausgerichteten Hallsensor gebildet, da diese Bauelemente bereits häufig bei der Erfassung der Verstellbewegung eingesetzt werden.

Alternativ dazu ist der Sensor auf einem magnetioresistiven Effekt aufgebaut, mit einem Geber als ein zylinderförmiger Mehrpolmagnet und einem auf die Zylinderfläche des Mehrpolmagneten ausgerichteten, magnetoresistiven Sensor als Empfänger.

In einer weiteren Ausgestaltung ist ein induktiver Sensor mit einem Signalgeber aus einer zylinderförmigen Magnetscheibe, die zwischen den Polen einer Metallgabel rotiert, und eine auf der Metallgabel angeordnete Induktionsspule als Signalempfänger vorgesehen. Durch die Drehung des Magneten wird in der Induktionsspule eine Spannung induziert, die sich in Abhängigkeit von der Relativbewegung der Scheibe zur Gabel verändert.

Bei der Anwendung eines optoelektronischen Sensors besteht eine bevorzugte Anordnung aus einer Loch- oder Schlitzscheibe und einem auf die Stirnseite der Loch- oder Schlitzscheibe ausgerichteten lichtaussendenden Element als Signalgeber, vorzugsweise einer Photodiode. Im Reflexionsbereich der von der Loch- oder Schlitzscheibe reflektierten Strahlen ist ein lichtempfangendes Element als Signalempfänger vorgesehen, vorzugsweise ein Phototransistor. Bei einer Verlagerung der Scheibe wird nur ein Teil der von der Photodiode ausgesandten Strahlen reflektiert, so daß sich eine entsprechende Änderung des Ausgangssignals des Phototransistors ergibt.

Ist der Sensor als Kondensator aufgebaut, besteht ein Teil der Sensoreinrichtung aus einer rotierenden Metallscheibe mit abwechselnden Bereichen unterschiedlicher Dielektrizitätskonstanten und einer die Kreisfläche der Metallscheibe teilweise überdeckenden Metallplatte.

Um bei der Anordnung des Verstellantriebes bzw. der Sensoreinrichtung eine größtmögliche Freiheit bezüglich der Ausrichtung der Bewegungsachsen zu haben, ist ein zweiseitiger, schwenkbarer Hebel mit einer schwingenden Masse an dem dem Signalgeber abgewandten Hebelarm angeordnet. Der dem Signalgeber zugewandte Hebelarm ist dergestalt dem Signalgeber zugeordnet, daß der Signalgeber korrespondierend zu der Schwingung der Masse axial verlagert wird. Vorteilhafterweise ist der Hebel signalgeberseitig als Gabel ausgebildet, die den Signalgeber umgreift, um eine Verlagerung in beide axiale Richtungen zu ermöglichen.

Anhand von in der Zeichnung dargestellten Ausführungsbeispielen soll der der Erfindung zugrundeliegende Gedanke näher erläutert werden. Es zeigen:
- Figur 1 -: einen prinzipiellen Aufbau der erfindungsgemäßen Vorrichtung;
- Figur 2 -: eine zeitliche Darstellung des Ausgangssignals eines Sensors mit unabhängig voneinander befestigten Sensorelementen sowie der Ausgangssignale der Schaltungsanordnung gemäß Figur 3;
- Figur 3 -: eine Schaltungsanordnung zur Auswertung der Sensorsignale;
- Figur 4 -: eine Anordnung mit axial beweglicher Antriebswelle und darauf befestigtem signalgebendem Sensorelement;
- Figur 5 -: eine vertikal angeordnete Antriebswelle mit darauf federnd abgestütztem signalgebendem Sensorelement;
- Figur 6 -: einen Schnitt durch einen als signalgebendes Sensorelement gemäß Figur 5 verwendeten Ringmagneten;
- Figuren 7 bis 10: verschiedene Ausgestaltungen der Sensoreinrichtung;
- Figur 11 -: eine Sensoreinrichtung mit einem Schwinghebel zur Umsetzung vertikaler Bewegungen in horizontale Bewegungen;
- Figur 12 -: eine federnde Befestigung eines signalgebenden Sensorelements an einer Antriebswelle und karosseriefeste Anordnung des signalempfangenden Sensorelements sowie
- Figur 13 -: eine federnde Anordnung des signalempfangenden Sensorelements und Befestigung des signalgebenden Sensorelements an einer Antriebswelle.

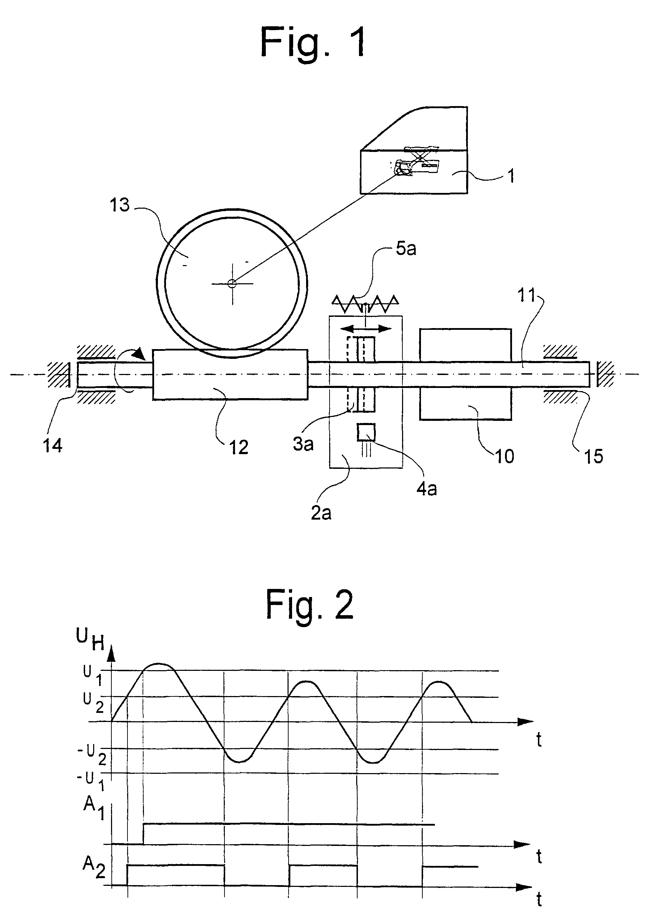

Figur 1 zeigt einen prinzipiellen Aufbau der erfindungsgemäßen Vorrichtung zum Erfassen der Verstellung translatorisch bewegter Verstelleinrichtungen 1 am Beispiel eines Fensterheberantriebes in einer Fahrzeugtür. Die Verstelleinrichtung 1 ist mit einer Antriebseinrichtung verbunden, die aus einem Elektromotor 10, einer karosseriefest in Wellenlagern 14, 15 gelagerten Antriebswelle 11, einer Schnecke 12 und einem Schneckenrad 13 besteht, das die Verstellung des Fensterhebers bewirkt. Aus Gründen der Meßgenauigkeit der auf das Fahrzeug wirkenden Kräfte tritt in Längserstreckung der Antriebswelle 11 kein oder nur ein sehr geringes Lagerspiel auf.

Der Antriebseinrichtung ist ein Sensor 2a mit einem karosseriefesten Sensorelement 4a und einem drehfest auf der Antriebswelle 11 angebrachten Sensorelement 3a zugeordnet. Das karosseriefeste Sensorelement 4a ist mit einer Schaltungsanordnung zur Auswertung der Sensorsignale verbunden. Diese Anordnung wird beispielsweise zum Erkennen der Drehrichtung und/oder der Drehzahl der Antriebseinrichtung eingesetzt und kann mittels eines Hallsensors realisiert werden.

Zum anderen erfaßt der Sensor 2a auf die Antriebseinrichtung einwirkende Kräfte. Zu diesem Zweck ist das Sensorelement 4a als ein signalempfangendes, ortsfestes Bauteil ausgebildet und das Sensorelement 3a als signalgebendes, mit der Antriebswelle 11 rotierendes Sensorelement 3a, das gegenüber dem signalempfangenden, ortsfesten Sensorelement 4a in Richtung des Doppelpfeiles in Längsrichtung der Antriebswelle 11 verschieblich ist, was durch die gestrichelte, versetzte Darstellung des rotierenden Sensorelements 3a angedeutet ist. Die Feder 5a gibt an, daß das signalgebende Sensorelement 3a federnd an der Karosserie oder an der Antriebseinrichtung bzw. die Antriebswelle federnd an der Karosserie abgestützt ist, so daß eine Verlagerung des signalgebenden Sensorelements 3a relativ zum signalempfangenden Sensorelement 4a eine Veränderung des Signalverlaufes bewirkt wird, die abhängig von der Relativbewegung beider Sensorelemente 3a, 4a zueinander ist. Auf diese Weise ist es möglich, mit einem Sensor 2a sowohl die Drehbewegung des Antriebs 10-13 als auch eine Beschleunigungskomponente in Richtung längs der Antriebswelle zu detektieren. Da aus dem Grad der Verschiebung des Sensorelementes 3a auf die Größe der Beschleunigungskraft geschlossen werden kann, ist mit dieser Vorrichtung eine quantitative Bestimmung einer auf die Antriebseinrichtung und die Verstelleinrichtung -einwirkenden Beschleunigungskraft möglich.

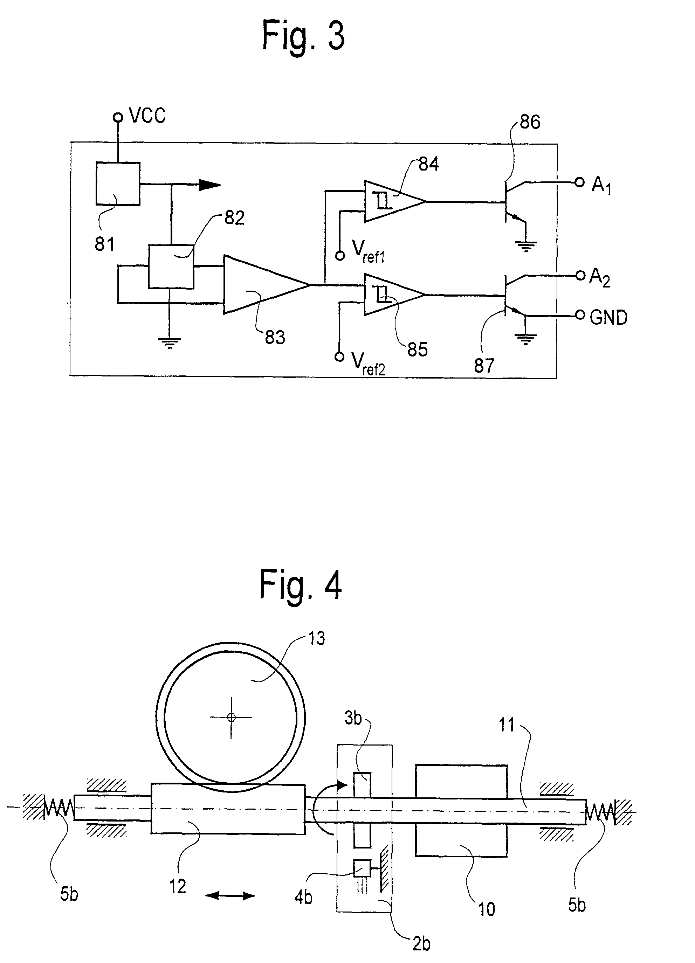

In Fig. 2 ist ein Verlauf der Hallspannung U_{H} über der Zeit t dargestellt, die durch einen Sensor 2a aufgenommen wurde. Der Kurvenverlauf der beiden Größen A1 und A2 über der Zeit t wird durch die in Fig. 3 dargestellte Schaltungsanordnung erzeugt. Ein Spannungsregler 81 erzeugt eine Spannung und ist mit einem Hallsensor 82 verbunden. Die von dem Hallsensor 82 erzeugten Signale werden einem Verstärker 83 zugeführt, dessen Ausgang mit den Eingängen zweier Komparatoren 84, 85 verbunden ist. An den Komparatoren 84, 85 ist je eine Referenzspannungsquelle Vref1, Vref2 angeschlossen, die die Referenzspannungen U1 und U2 abgeben, die einem vorgebbaren Schwellwert für die Auslösung der Signale A1 und A2 entsprechen. Werden diese Werte über- bzw. unterschritten, so wird über die Transistoren 86, 87 das jeweilige Signal A1 oder A2 ausgegeben.

Wie aus der unteren Kurve ersichtlich, wird bei Erreichen der Referenzspannung U2 die ansteigende Flanke des Signals A2 ausgelöst, während bei Erreichen der größeren Referenzspannung U1 die ansteigende Flanke des Signals A1 ausgelöst wird, wobei der Verlauf des Sgnals A2 beispielsweise der Drehzahlerfassung der Antriebseinrichtung - und in Verbindung mit einem weiteren Sensor oder einer besonderen Auswertschaltung der Drehrichtungserkennung - und der Verlauf des Signals der Erfassung von auf die Verstelleinrichtung einwirkenden Kräften dient. Das Signal A2 fällt auf Null zurück, wenn die Spannung U_{H} größer als -U2 wird und das Signal A1 fällt ab, wenn die vom signalempfangenden Sensorelement abgegebene Spannung U_{H} unter einen vorgegebenen Wert fällt.

Figur 4 zeigt eine Ausführungsform des in Figur 1 dargestellten Prinzips, bei der das signalempfangende Sensorelement 3b fest mit der Antriebswelle 11 verbunden ist. Um eine Verlagerung der Sensorelemente 3b und 4b zueinander bei auftretenden Beschleunigungskräften zu ermöglichen, ist der gesamte Antrieb an den Enden der Antriebswelle 11 axial beweglich abgestützt. Auf diese Weise können auch Einflüsse der Verstelleinrichtung, die über das Schneckengetriebe 12, 13 einfließen, vom Sensor 2b aufgenommen werden.

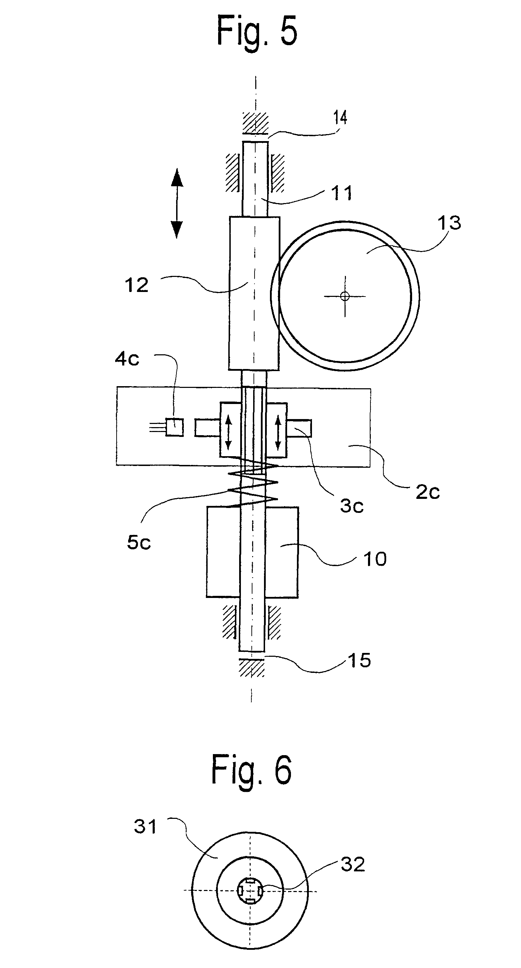

Eine andere Art der Ausrichtung eines Sensors 2c ist in Figur 5 gezeigt, bei der das signalgebende Sensorelement 3c als Ringmagnet und das signalempfangende Sensorelement 4c als ein ortsfester Hallsensor ausgebildet ist. Der Ringmagnet 3c ist dabei längsverschieblich in Richtung der Doppelpfeile auf der Antriebswelle 11 gelagert und über eine Feder 5c, die karosseriefest abgestützt ist, elastisch gelagert. Bei der gezeigten Ausführungsform wird durch die Schwerkraft eine Vorspannung in der Feder 5c erzeugt, so daß der Ringmagnet 3c beim Fehlen von Beschleunigungskräften in einer Ruhelage gehalten wird. Die Ruhelage ist so gewählt, daß der Hallsensor 4c auf den Ringmagneten 3c ausgerichtet ist.

Beim Befahren einer Schlechtwegstrecke wird der Ringmagnet 3c durch die vertikalen Beschleunigungskräfte in Schwingung versetzt, was durch den Hallsensor 3c detektiert und als Sensorsignale an eine Schaltungsanordnung zur Auswertung der Sensorsignale weitergegeben wird. Um die drehfeste Verbindung des Ringmagneten 3c auf der Antriebswelle 11 bei gleichzeitiger Verschieblichkeit zu gewährleisten, ist die Antriebswelle 11 mit Nuten versehen, in die eine entsprechende Verzahnung 32 des Ringmagneten 31 eingreift, wie in Figur 6 dargestellt ist.

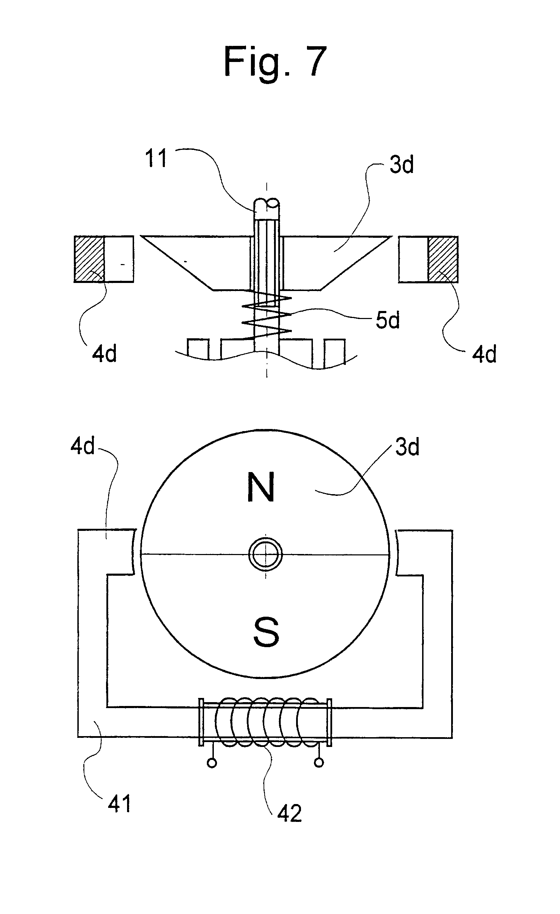

Als Variante ist in Figur 7 eine Anordnung dargestellt, bei der das signalempfangende Element 4d auf induktiver Basis arbeitet und das signalgebende Element 3d als eine kegelstumpfförmige Magnetscheibe ausgebildet ist und eine Magnetisierung wie in der Draufsicht der unteren Darstellung aufweist. Der Draufsicht ist zu entnehmen, daß das signalgebende Sensorelement 3d aus einem als Metallgabel ausgebildeten Eisenkern 41 besteht, auf dem eine Induktionsspule 42 angeordnet ist. Bei einer Drehung der Magnetscheibe 3d wird infolge der sich im Eisenkern 41 ändernden magnetischen Feldstärke in der Induktionsspule 42 eine Spannung induziert, deren Größe von der Stellung der Magnetscheibe 3d in Bezug auf den Eisenkern 41 abhängt. Infolge der Kegelstumpfform der Magnetscheibe 3d ändert sich die in der Induktionsspule 42 induzierte Spannung bei einer Auf- und Abwärtsbewegung der Magnetscheibe 3d wegen der sich ändernden Feldstärke im Eisenkern 41.

Durch die Abschrägung der dem signalempfangenden Sensorelement 4d gegenüberstehenden Seiten der kegelstumpfförmigen Magnetscheibe 3d wird die induzierte Spannung entsprechend der Auslenkung charakteristisch verändert, wodurch Rückschlüsse auf den Grad der Beschleunigungskraft gezogen werden können.

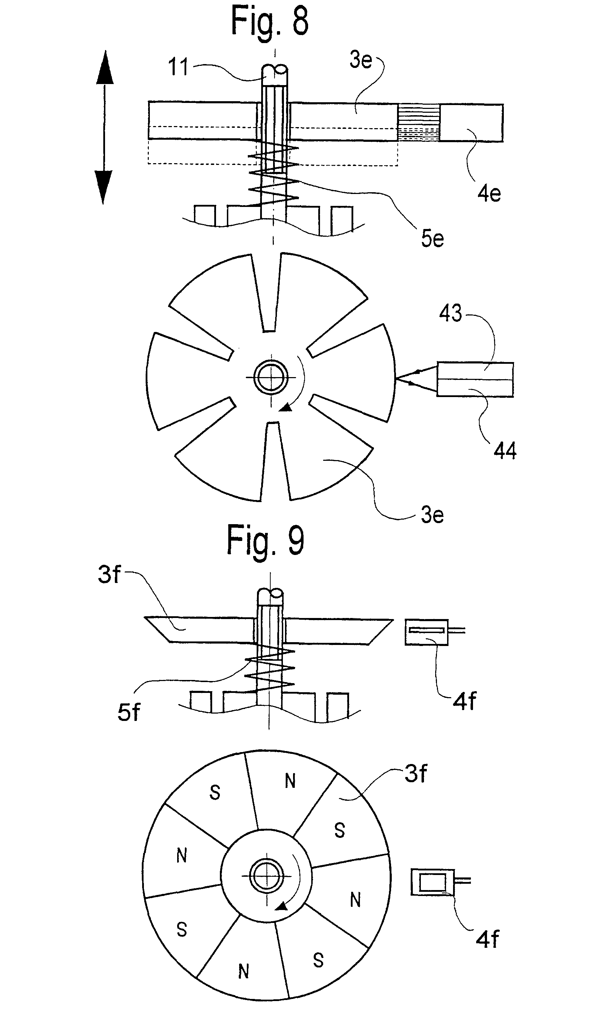

Auf einem optoelektronischen Prinzip beruht die in Figur 8 dargestellte Anordnung. Das signalgebende Sensorelement 3e ist als eine über eine Feder 5e elastisch an der Karosserie abgestütze Schlitzscheibe ausgebildet, von deren Umfang die von dem signalempfangenden Sensorelement 4e ausgesendeten Lichtstrahlen reflektiert werden. Die reflektierten Strahlen werden vom signalempfangenden Sensorelement 4e aufgenommen und in elektrische Signale umgesetzt. Bei einer Verschiebung der Schlitzscheibe 3e senkrecht zur Scheibenfläche wird ein Teil der Strahlung nicht reflektiert, da sich die Reflexionsfläche verändert, woraus auf die auf die Schlitzscheibe und damit auf die Verstelleinrichtung einwirkende Beschleunigungskraft geschlossen werden kann.

Das signalempfangende Sensorelement 4e besteht in diesem Ausführungsbeispiel aus einer Kombination aus einer Photodiode 43 und einem Phototransistor 44.

Figur 9 zeigt einen ähnlichen Aufbau wie das in Figur 7 dargestellte Sensorelement und besteht aus einer Magnetscheibe 3f, die als Multimagnetscheibe ausgebildet ist, während das signalempfangende Sensorelement 4f aus einem magnetoresistiven Element, z.B. aus einer Feldplatte, besteht. Auch in dieser Anordnung weist die Multimagnetscheibe 3f eine Kegelstumpfform auf, so daß durch die Abschrägung der dem signalempfangenden Sensorelement 4f gegenüberstehenden Seiten der kegelstumpfförmigen Multimagnetscheibe 3f die induzierte Spannung entsprechend der Auslenkung charakteristisch verändert wird und somit Rückschlüsse auf den Grad der Beschleunigungskraft gezogen werden können.

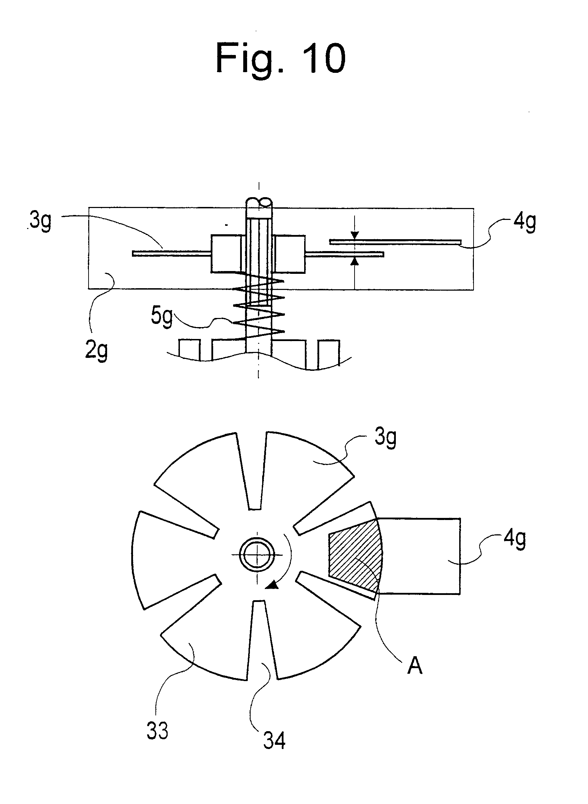

In Figur 10 ist das Zusammenwirken von Signalgeber 3g und Signalempfänger 4g auf kapazitiver Basis dargestellt. Der Signalgeber 3g ist als rotierende Metallscheibe mit abwechselnden Bereichen 33, 34 unterschiedlicher Dielektrizitätskonstante ausgebildet und wird teilweise von einer Metallplatte 4g überdeckt, die in einem Abstand d zu der Metallscheibe 3g angeordnet ist. Da die Metallscheibe 3g axial beweglich über die Feder 5g abgestützt ist, kann sich der Abstand d in Abhängigkeit von der zu messenden Beschleunigungskraft verändern, wodurch sich die Kapazität umgekehrt proportional zum Abstand d ändert. Hier kann auch durch eine radiale Verlagerung der Metallplatte 4g eine Änderung der Kapazität über die Änderung der überdeckten Fläche A erkannt werden, so daß dieses Prinzip für die Erkennung von Beschleunigungskräften in mehreren Richtungen geeignet ist.

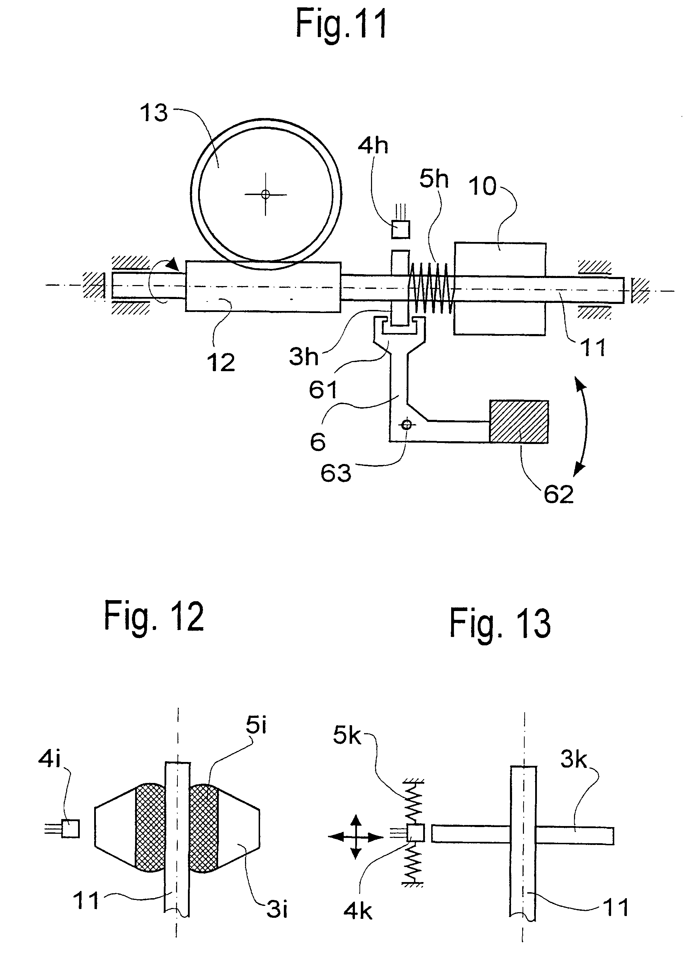

Um eine möglichst unabhängige Anordnung der Antriebseinheit und damit der Ausrichtung der Antriebswelle 11 zu ermöglichen, ist entsprechend Figur 11 eine schwingende Masse 62 an einem um eine Drehachse 63 beweglichen winkeligen Hebelarm 6 angebracht. An dem der schwingenden Masse 62 gegenüberliegenden Ende des Hebelarms 6 ist eine Gabel 61 ausgebildet, die bei einer auf- bzw. abwärtsgerichteten Bewegung der Masse 62 das signalgebende Sensorelement 3h nach links bzw. rechts aus seiner Ruhelage verschiebt. Durch die verschiedenen Hebelverhältnisse können auf diese Weise leicht unterschiedliche Empfindlichkeiten eingestellt werden.

Ebenso ist durch eine entsprechende Winkelstellung des Hebelarms jede beliebige Kraftrichtung unabhängig von der Ausrichtung der Antriebswelle 11 erfassbar.

Statt der dargestellten Federn 5a-h können selbstverständlich auch andere Federelemente eingesetzt werden. Auch ist sowohl eine federnde Abstützung entweder des signalgebenden Sensorelements oder des signalempfangenden Sensorelements bzw. beider Sensorelemente möglich, wenn diese beispielsweise an unterschiedlichen Bauteilen und/oder in unterschiedliche Richtungen und/oder über unterschiedliche Federlemente abgestützt sind.

Figur 12 zeigt eine Befestigung eines signalgebenden Sensorelementes 3i an einer Antriebswelle 11 über ein gummielastisches Federelement 5i, das eine Bewegung des signalgebenden Sensorelementes 3i in alle Richtungen zuläßt. Das signalaufnehmende Sensorelemente 4i ist dabei ortsfest montiert.

Alternativ dazu ist in Fig. 13 ein signalaufnehmendes Sensorelementes 4j frei beweglich über Federn 5j gelagert, wobei es in Ruhelage auf das ortsfeste, sich drehende signalgebende Sensorelemente 3j ausgerichtet ist. Selbstverständlich kann das signalaufnehmende Sensorelement 4j auch über andere Federelemente an der Karosserie oder an dem Antrieb befestigt werden. Möglich ist auch, daß das signalgebende Sensorelement sich nicht dreht, sondern von dem signalaufnehmenden Sensorelement umkreist wird.

### Bezugszeichenliste:

- 1 -: Verstelleinrichtung
- 2a-j -: Sensor
- 3a-j -: Signalgebendes Sensorelement (Signalgeber)
- 4a-j -: Signalempfangendes Sensorelement (Signalempfänger)
- 5a-j -: Federelement
- 6 -: Hebel
- 10 -: Antrieb
- 11 -: Antriebswelle
- 12 -: Schnecke
- 13 -: Schneckenrad
- 14,15 -: Wellenlager
- 31 -: Ringmagnet
- 32 -: Verzahnung
- 33 -: Metallscheibe
- 34 -: Schlitz
- 41 -: Metallgabel
- 42 -: Induktionsspule
- 43 -: Photodiode
- 44 -: Phototransistor
- 61 -: Hebelarm
- 62 -: schwingende Masse
- 63 -: Drehpunkt
- 81 -: Spannungsregler
- 82 -: Empfänger
- 83 -: Verstärker
- 84,85 -: Komparator
- 86,87 -: Transistor

## Patentansprüche

1. Vorrichtung zum Erfassen der Verstellung translatorisch bewegter Verstelleinrichtungen in Fahrzeugen, insbesondere Fensterheber, Schiebedächer und dergleichen, mit einem Sensor, der ein von der Verstellbewegung der Verstelleinrichtung abhängiges Sensorsignal an eine Schaltungsanordnung- zur Auswertung des Sensorsignals abgibt,
**dadurch gekennzeichnet,**
**daß** der Sensor (2a - 2j) zusätzlich auf das Fahrzeug einwirkende Beschleunigungskräfte erfaßt und ein diesen Beschleunigungskräften entsprechendes, charakteristisch verändertes Signal an die Schaltungsanordnung zur Auswertung der Sensorsignale abgibt.

2. Vorrichtung nach Anspruch 1, **dadurch gekennzeichnet, daß** der Sensor (2a - 2j) in Richtung der Verstellbewegung auf das Fahrzeug einwirkende Beschleunigungskräfte erfaßt.

3. Vorrichtung nach Anspruch 1 oder 2, **dadurch gekennzeichnet, daß** der Sensor (2a - 2j) aus mehreren einander zugeordneten Sensorelementen (3a - 3j; 4a - 4j) besteht, von denen ein erstes Sensorelement (3a - 3j bzw. 4a - 4j) mit der Verstelleinrichtung (1) oder einem Antrieb (10 - 13) für die Verstelleinrichtung (1) verbunden und ein dem ersten Sensorelement (3a - 3j bzw. 4a - 4j) zugeordnetes zweites Sensorelement (3a - 3j bzw. 4a - 4j) unabhängig vom ersten Sensorelement (3a - 3j; 4a - 4j) angeordnet ist.

4. Vorrichtung nach Anspruch 3, **dadurch gekennzeichnet, daß** mindestens eines der Sensorelemente (3a - 3j; 4a - 4j) federnd unmittelbar am Fahrzeugchassis oder über die Verstelleinrichtung (1) bzw. den Antrieb (10 - 13) für die Verstelleinrichtung (1) am Fahrzeugchassis abgestützt ist.

5. Vorrichtung nach mindestens einem der vorangehenden Ansprüche, **dadurch gekennzeichnet, daß** die Sensorelemente (3a - 3j; 4a - 4j) berührungslos zueinander angeordnet sind.

6. Vorrichtung nach Anspruch 5, **dadurch gekennzeichnet, daß** ein signalgebendes Sensorelement (3a - 3j) ein Signal mit konstanter Amplitude und/oder Frequenz abgibt und daß die von einem signalempfangenden Sensorelement (4a - 4j) erfaßten Amplituden- und/oder Frequenzänderungen eine Funktion der auf das Fahrzeug einwirkenden Kräfte sind.

7. Vorrichtung nach Anspruch 6, **dadurch gekennzeichnet, daß** das signalgebende Sensorelement (3a - 3j) mindestens eine Partitionierung mit zwei Abschnitten unterschiedlicher Signalpegel aufweist und daß das signalempfangende Sensorelement (4a - 4j) mindestens so in Bezug auf das signalgebende Sensorelement (3a - 3j) positioniert ist, daß zum einen die von den Abschnitten unterschiedlicher Signalpegel ausgehenden Signale und zum anderen auf Verschiebungen des signalgebenden Sensorelements (3a - 3j) und/oder des signalempfangenden Sensorelements (4a - 4j) beruhende Signaländerungen erfaßt werden.

8. Vorrichtung nach mindestens einem der vorangehenden Ansprüche, **dadurch gekennzeichnet, daß** die Schaltungsanordnung zur Auswertung der Sensorsignale ein Beschleunigungssignal (A1) abgibt, wenn die von dem signalempfangenden Sensorelement (4a - 4j) erfaßten Amplituden- und/oder Frequenzänderungen einen vorgegebenen Schwellwert überschreiten.

9. Vorrichtung nach mindestens einem der vorangehenden Ansprüche, **dadurch gekennzeichnet, daß** die Schaltungsanordnung zur Auswertung der Sensorsignale einen mit dem Ausgang des signalempfangenden Sensorelements (4a - 4j; 82) verbundenen Verstärker (83) aufweist, dessen Ausgang mit dem einen Eingang eines ersten Komparators (84) verbunden ist, dessen anderer Eingang an eine erste Referenzspannungsquelle (Vref1) angeschlossen ist, die dem vorgebbaren Schwellwert der Amplitudenänderung entspricht, und an dessen Ausgang das Beschleunigungssignal (A1) ansteht.

10. Vorrichtung nach mindestens einem der vorangehenden Ansprüche, **gekennzeichnet durch** einen die Drehzahl und/oder Drehrichtung des Antriebs (10 - 13) der Verstelleinrichtung (1) erfassenden Sensor (2a - 2k) mit einem mit der Antriebswelle (11) verbundenen Signalgeber (3a - 3j) und einem dem Signalgeber (3a - 3j) zugeordneten Signalempfänger (4a - 4j), die relativ zueinander beweglich angeordnet sind, wobei der Signalempfänger (4a - 4j) Relativbewegungen zwischen dem Signalgeber (3a - 3j) und dem Signalempfänger (4a - 4j) erfaßt und den Relativbewegungen entsprechende Sensorsignale an die Schaltungsanordnung zur Auswertung der Sensorsignale abgibt.

11. Vorrichtung nach Anspruch 10, **dadurch gekennzeichnet, daß** der Signalgeber (3a, 3c - 3i) in axialer Richtung um eine Ruhestellung elastisch verschiebbar an der Antriebswelle (11) abgestützt ist und der Signalempfänger (4a - 4j) axiale Verschiebungen des Signalgebers (3a, 3c - 3i) erfaßt.

12. Vorrichtung nach Anspruch 10, **dadurch gekennzeichnet, daß** der Signalgeber (3b) fest mit der Antriebswelle (11) verbunden und die Antriebswelle (11) in axialer Richtung um eine Ruhestellung elastisch verschiebbar gelagert ist.

13. Vorrichtung nach Anspruch 10, **dadurch gekennzeichnet, daß** der Signalempfänger (4j) in axialer Richtung der Antriebswelle (11) und/oder senkrecht zur Antriebswelle (11) um eine Ruhestellung elastisch verschiebbar angeordnet ist.

14. Vorrichtung nach Anspruch 13, **dadurch gekennzeichnet, daß** der Signalempfänger (4j) entlang einer Führungsbahn verschiebbar ist.

15. Vorrichtung nach mindestens einem der voranstehenden Ansprüche, **dadurch gekennzeichnet, daß** der Signalgeber (3c) aus einem Ringmagneten (31) oder einem zylinderförmigen Multipolmagneten und der Signalempfänger (4c) aus einem auf den Ringmagneten (31) oder die Zylinderfläche des Multipolmagneten ausgerichteten Hallsensor besteht.

16. Vorrichtung nach mindestens einem der Ansprüche 1 bis 14, **gekennzeichnet durch** einen magnetoresistiven Sensor mit einem zylinderförmigen Mehrpolmagneten (3f) als Signalgeber und einem auf die Zylinderfläche des Mehrpolmagneten (3f) ausgerichteten magnetoresistiven Sensor (4f) als Signalempfänger.

17. Vorrichtung nach mindestens einem der Ansprüche 1 bis 14, **gekennzeichnet durch** einen induktiven Sensor mit einem Signalgeber aus einer zylinderförmigen Magnetscheibe (3d), die zwischen den Polen einer Metallgabel (41) rotiert und einer auf der Metallgabel (41) angeordneten Induktionsspule (42) als Signalempfänger (4d).

18. Vorrichtung nach mindestens einem der Ansprüche 1 bis 14, **gekennzeichnet durch** einen optoelektronischen Sensor mit einer Loch- oder Schlitzscheibe (3e) und einem auf die Stirnseite der Loch- oder Schlitzscheibe (3e) ausgerichteten lichtemittierenden Element (43) als Signalgeber, vorzugsweise einer Photodiode, und einem im Reflexionsbereich der von der Loch- oder Schlitzscheibe (3e) reflektierten Strahlen angeordneten lichtempfangenden Element (44) als Signalempfänger, vorzugsweise einem Phototransistor.

19. Vorrichtung nach mindestens einem der Ansprüche 1 bis 14, **gekennzeichnet durch** einen kapazitiven Sensor mit einer rotierenden Metallscheibe (3g) mit abwechselnden Bereichen (33, 34) unterschiedlicher Dielektrizitätskonstante und einer die Kreisfläche der Metallscheibe (3g) teilweise überdeckenden Metallplatte (4g).

20. Vorrichtung nach mindestens einem der voranstehenden Ansprüche, **dadurch gekennzeichnet, daß** ein zweiseitiger, schwenkbarer Hebel (6) mit einer schwingenden Masse (62) an dem dem Signalgeber (3h) abgewandten Hebelarm angeordnet ist und daß der dem Signalgeber (3h) zugewandte Hebelarm dergestalt dem Signalgeber (3h) zugeordnet ist, daß der Signalgeber (3h) korrespondierend zu der Schwingung der Masse (62) axial verlagert wird.

21. Vorrichtung nach Anspruch 20, **dadurch gekennzeichnet, daß** der Hebel (6) signalgeberseitig als Gabel (61) ausgebildet ist, die den Signalgeber (3h) umgreift.

## Claims

1. Device for detecting the adjustment of translationally moved adjusting devices in vehicles, more particularly window lifters, sliding roofs and the like, with a sensor which sends a sensor signal which is dependent on the adjusting movement of the adjusting device, to a circuit arrangement for evaluating the sensor signal,
**characterised in that**
the sensor (2a - 2j) additionally detects forces of acceleration acting on the vehicle and emits a characteristically modified signal corresponding to these forces of acceleration to the circuit arrangement for evaluating the sensor signals.

2. Device according to claim 1 **characterised in that** the sensor (2a-2j) detects forces of acceleration acting on the vehicle in the direction of the adjusting movement.

3. Device according to claim 1 or 2 **characterised in that** the sensor (2a - 2j) consists of several associated sensor elements (3a - 3j; 4a- 4j) of which a first sensor element (3a - 3j or 4a - 4j) is connected to the adjusting device (1) or a drive (10 - 13) for the adjusting device (1), and a second sensor element (3a - 3j or 4a - 4j) associated with the first sensor element (3a - 3j or 4a - 4j) is mounted independently of the first sensor element (3a - 3j; 4a - 4j).

4. Device according to claim 3 **characterised in that** at least one of the sensor elements (3a - 3j; 4a - 4j) is supported resiliently directly on the vehicle chassis or through the adjusting device (1) or drive (10 - 13) for the adjusting device (1) on the vehicle chassis.

5. Device according to at least one of the preceding claims **characterised in that** the sensor elements (3a - 3j; 4a - 4j) are mounted free of contact relative to each other.

6. Device according to claim 5 **characterised in that** a signal-transmitting sensor element (3a - 3j) emits a signal with constant amplitude and/or frequency and that the amplitude and/or frequency changes detected by the signal-receiving sensor element (4a - 4j) are a function of the forces acting on the vehicle.

7. Device according to claim 6 **characterised in that** the signal-emitting sensor element (3a - 3j) has at least a partitioning with two sections of different signal levels and that the signal-receiving sensor element (4a - 4j) is positioned relative to the signal-emitting sensor element (3a - 3j) at least so that on the one hand the signals coming from sections of different signal level and on the other signal changes based on displacements of the signal-emitting sensor element (3a - 3j) and/or signal-receiving sensor element (4a - 4j) are detected.

8. Device according to at least one of the preceding claims **characterised in that** the circuit arrangement for evaluating the sensor signals emits an acceleration signal (A1) when the amplitude and/or frequency modifications detected by the signal-receiving sensor element (4a - 4j) exceed a predetermined threshold value.

9. Device according to at least one of the preceding claims **characterised in that** the circuit arrangement for evaluating the sensor signals has an amplifier (83) which is connected to the output of the signal-receiving sensor element (4a - 4j); 82), with the output of the amplifier being connected to the one input of the first comparator (84) whose other input is attached to a first reference voltage source (Vref1) which corresponds to the predeterminable threshold value of the amplitude modification, and at whose output the acceleration signal (A1) arises.

10. Device according to at least one of the preceding claims, **characterised by** a sensor (2a - 2k) detecting the speed and/or rotary direction of the drive (10 - 13) of the adjusting device (1) and having a signal transmitter (3a - 3j) connected to the drive shaft (11), and a signal receiver (4a - 4j) associated with the signal transmitter (3a - 3j), with the transmitter and receiver arranged movable relative to each other wherein the signal receiver (4a -4j) detects relative movements between the signal transmitter (3a - 3j) and the signal receiver (4a - 4j) and sends sensor signals corresponding to the relative movements to the circuit arrangement for evaluating the sensor signals.

11. Device according to claim 10 **characterised in that** the signal transmitter (3a, 3c - 3i) is supported on the drive shaft (11) elastically displaceable in the axial direction about a rest position, and the signal receiver (4a - 4j) detects axial displacements of the signal transmitter (3a, 3c - 3i).

12. Device according to claim 10 **characterised in that** the signal transmitter (3b) is fixedly connected to the drive shaft (11) and the drive shaft (11) is mounted elastically displaceable in the axial direction about a rest position.

13. Device according to claim 10 **characterised in that** the signal receiver (4j) is mounted elastically displaceable about a rest position in the axial direction of the drive shaft (11) and/or perpendicular to the drive shaft (11).

14. Device according to claim 13 **characterised in that** the signal receiver (4j) is displaceable along a guide path.

15. Device according to at least one of the preceding claims **characterised in that** the signal transmitter (3c) consists of a ring magnet (31) or a cylindrical multi pole magnet and the signal receiver (4c) consists of a Hall sensor aligned with the ring magnet (31) or the cylinder face of the multi pole magnet.

16. Device according to at least one of claims 1 to 14 **characterised by** a magneto-resistive sensor having a cylindrical multi pole magnet (3f) as signal transmitter and a magneto-resistive sensor (4f) aligned with the cylinder face of the multi pole magnet (3f) as signal receiver.

17. Device according to at least one of claims 1 to 14 **characterised by** an inductive sensor with a signal transmitter of a cylindrical magnetic disc (3d), which rotates between the poles of a metal fork (41) and an induction coil (42) acting as signal receiver arranged on the metal fork.

18. Device according to at least one of claims 1 to 14 **characterised by** an optoelectronic sensor with an apertured or slit disc (3e) and a light emitting element (43) directed to the end face of the apertured or slit disc (3e) as signal transmitter, preferably a photodiode, and a light receiving element (44) mounted in the reflection area of the rays reflected by the hole or slit disc (3e), as signal receiver, preferably a phototransistor.

19. Device according to at least one of claims 1 to 14 **characterised by** a capacitative sensor with a rotating metal disc (3g) having alternating areas (33, 34) of different dielectricity constants and a metal plate (4g) partially covering the circular face of the metal disc (3g).

20. Device according to at least one of the preceding claims **characterised in that** a two-sided swivel lever (6) with a vibrating mass (62) is mounted on the lever arm remote from the signal transmitter (3h) and that the lever arm facing the signal transmitter (3h) is associated with the signal transmitter (3h) so that the signal transmitter (3h) is moved axially corresponding to the vibration of the mass (62).

21. Device according to claim 20 **characterised in that** the lever (6) is formed on the signal-transmitter side as a fork (61) which engages round the signal transmitter (3h).

## Revendications

1. Dispositif pour détecter le réglage de dispositifs de réglage déplacés en translation dans des véhicules, notamment des lève-glaces, des toits coulissants et analogues, comportant un capteur qui délivre un signal de capteur, qui dépend du déplacement de réglage du dispositif de réglage, à un montage servant à évaluer le signal du capteur,
**caractérisé en ce**
**que** le capteur (2a-2j) détecte en supplément des forces d'accélération qui agissent sur le véhicule et délivre un signal, qui correspond à ces forces d'accélération et varie d'une manière caractéristique, au montage pour l'évaluation des signaux du capteur.

2. Dispositif selon la revendication 1, **caractérisé en ce que** le capteur (2a-2j) détecte des forces d'accélération qui agissent sur le véhicule dans la direction du déplacement de réglage.

3. Dispositif selon la revendication 1 ou 2, **caractérisé en ce que** le capteur (2a-2j) est constitué par plusieurs éléments de capteur (3a-3j; 4a-4j) associés entre eux et dont un premier élément de capteur (3a-3j ou 4a-4j) est relié au dispositif de réglage (1) ou à un dispositif d'entraînement (10-13) pour le dispositif de réglage (1), et un second élément de capteur (3a-3j ou 4a-4j), associé au premier élément de capteur (3a-3j ou 4a-4j), indépendamment du premier élément de capteur (3a-3j; 4a-4j).

4. Dispositif selon la revendication 3, **caractérisé en ce qu'**au moins l'un des éléments de capteur (3a-3j; 4a-4j) prend appui au moins élastiquement directement sur le châssis du véhicule ou par l'intermédiaire du dispositif de réglage (1) ou du dispositif d'entraînement (10-13) pour le dispositif de réglage (1) sur le châssis du véhicule.

5. Dispositif selon au moins l'une des revendications précédentes, **caractérisé en ce que** les éléments de capteur (3a-3j; 4a-4j) sont disposés sans contact réciproque.

6. Dispositif selon la revendication 5, **caractérisé en ce qu'**un élément de capteur (3a-3j) délivrant un signal délivre un signal ayant une amplitude constante et/ou une fréquence constante et que les variations d'amplitude et/ou de fréquence détectées par l'élément de capteur (4a-4j), qui reçoit le signal, sont fonction des forces agissant sur le véhicule.

7. Dispositif selon la revendication 6, **caractérisé en ce que** l'élément de capteur (3a-3j) délivrant le signal comporte au moins une subdivision avec deux sections ayant des niveaux différents du signal et que l'élément de capteur (4a-4j) recevant le signal est positionné par rapport à l'élément de capteur (3a-3j) délivrant le signal au moins de telle sorte que d'une part les signaux, qui sont délivrés par les sections de niveaux différents de signal et d'autre part des variations de signaux, qui sont basées sur des déplacements de l'élément de capteur (3a-3j), délivrant des signaux, et/ou de l'élément de capteur (4a-4j) recevant les signaux, sont détectés.

8. Dispositif selon au moins l'une des revendications précédentes, **caractérisé en ce que** le montage servant à évaluer les signaux du capteur délivre un signal d'accélération (A1) lorsque les variations d'amplitude et/ou de fréquence, détectées par l'élément de capteur (4a-4j) recevant le signal dépassent une valeur de seuil prédéterminée.

9. Dispositif selon au moins l'une des revendications précédentes, **caractérisé en ce que** le montage servant à évaluer les signaux du capteur comporte un amplificateur (83), qui est relié à la sortie de l'élément de capteur (4a-4j; 82) recevant les signaux et dont la sortie est reliée à une entrée d'un premier comparateur (84), dont l'autre entrée est raccordée à la première source de tension de référence (Vref1), qui correspond à la valeur de seuil pouvant être prédéterminée de la variation d'amplitude et sur la sortie duquel est présent le signal d'accélération (A1).

10. Dispositif selon au moins l'une des revendications précédentes, **caractérisé par** un capteur (2a-2k), qui détecte la vitesse de rotation et/ou le sens de rotation du dispositif d'entraînement (10-13) du dispositif de réglage (1), et un récepteur de signaux (4a-4j), qui est associé au générateur de signaux (3a-3j), le générateur et le récepteur de signaux étant disposés de manière à être déplaçables l'un par rapport à l'autre, le récepteur de signaux (4a-4j) détectant des déplacements relatifs entre le générateur de signaux (3a-3j) et le récepteur de signaux (4a-4j) et délivrant les signaux des capteurs, correspondant aux déplacements relatifs, au montage servant à évaluer les signaux des capteurs.

11. Dispositif selon la revendication 10, **caractérisé en ce que** le générateur de signaux (3a, 3c-3i) est supporté par l'arbre d'entraînement en étant déplaçable élastiquement sur l'arbre d'entraînement (11) dans une direction axiale autour d'une position de repos et que le récepteur de signaux (4a-4j) détecte des déplacements axiaux du générateur de signaux (3a, 3c-3i).

12. Dispositif selon la revendication 10, **caractérisé en ce que** le générateur de signaux (3b) est relié de façon fixe à l'arbre d'entraînement (11) et que l'arbre d'entraînement (11) est monté de manière à être déplaçable élastiquement dans une direction axiale autour d'une position de repos.

13. Dispositif selon la revendication 10, **caractérisé en ce que** le récepteur de signaux (4j) est disposé de manière à être déplaçable élastiquement autour d'une position de repos dans une direction axiale de l'arbre d'entraînement (11) et/ou perpendiculairement à l'arbre d'entraînement (11).

14. Dispositif selon la revendication 13, **caractérisé en ce que** le récepteur de signaux (4j) est déplaçable le long d'une voie de guidage.

15. Dispositif selon au moins l'une des revendications précédentes, **caractérisé en ce que** le générateur de signaux (3c) est constitué par un aimant annulaire (31) ou par un aimant multipolaire de forme cylindrique et que le récepteur de signaux (4c) est constitué par un capteur de Hall, qui est dirigé sur l'aimant annulaire (31) ou sur la surface cylindrique de l'aimant multipolaire.

16. Dispositif selon au moins l'une des revendications 1 à 14, **caractérisé par** un capteur magnétorésistif comportant un aimant multipolaire de forme cylindrique (3f) en tant que générateur de signaux et un capteur magnétorésistif (4f) orienté vers la surface cylindrique de l'aimant multipolaire (3f), en tant que récepteur de signaux.

17. Dispositif selon au moins l'une des revendications 1 à 14, **caractérisé par** un capteur inductif comportant un générateur de signaux constitué par un disque magnétique de forme cylindrique (3d), qui tourne entre les pôles d'une fourche métallique (41), et une bobine d'induction (42) disposée sur la fourche métallique (41), en tant que récepteur de signaux (4d).

18. Dispositif selon au moins l'une des revendications 1 à 14, **caractérisé par** un capteur optoélectronique comportant un disque perforé ou un disque fendu (3c) et un élément électroluminescent (43), qui est dirigé sur la face frontale du disque perforé ou du disque fendu (3c) et est utilisé comme générateur de signaux, de préférence une photodiode, et un élément de réception de lumière (44), qui est disposé dans la zone de réflexion des rayons réfléchis par le disque fendu ou perforé (3a) et est utilisé en tant que récepteur de signaux, de préférence un phototransistor.

19. Dispositif selon au moins l'une des revendications 1 à 14, **caractérisé par** un capteur capacitif comportant un disque métallique rotatif (3g) possédant des zones alternées (33, 34) ayant des constantes diélectriques différentes, et une plaque métallique (4g) qui recouvre partiellement la surface circulaire du disque métallique (3g).

20. Dispositif selon au moins l'une des revendications précédentes, **caractérisé en ce qu'**un second levier pivotant à deux bras (6) est disposé avec une masse oscillante (62) sur le bras de levier tourné à l'opposé du générateur de signaux (3h) et que le bras de levier tourné vers le générateur de signaux (3h) est associé au générateur de signaux (3h) de telle sorte que le générateur de signaux (3h) est décalé axialement d'une manière correspondant à l'oscillation de la masse (62).

21. Dispositif selon la revendication 20, **caractérisé en ce que** le levier (6) est réalisé, du côté du générateur de signaux, sous la forme d'une fourche (61), qui entoure le générateur de signaux (3h).
